# EUROPEAN PATENT SPECIFICATION

(11) **EP 2 933 050 B1**
(45) Date of publication and mention of the grant of the patent: **07.06.2023**
(21) Application number: 14425043.8
(22) Date of filing: 16.04.2014
(51) Int. Cl.: B23K 26/00, B23K 26/06, B23K 26/08, B23K 26/352, B41M 5/26, B29C 59/16, B41M 5/24, B23K 103/00

(54) **Method for processing polymeric sheets, and associated sheets**
Verfahren zur Verarbeitung von Polymerfolien und entsprechende Folien
Procédé de traitement de feuilles de polymère et feuilles associées

(43) Date of publication of application: 21.10.2015
(60) Divisional application: 23166059.8
(73) Proprietor: Ondaplast S.p.a., 47020 Longiano FC (IT)
(72) Inventor: Rossi, Renzo, 47822 Santarcangelo DI Romagna FC (IT); Boghi, Claudio, 47020 Longiano FC (IT); Paolucci, Fabrizio, 47043 Gatteo FC (IT)
(74) Representative: Modiano, Micaela Nadia

(56) References cited:
- WO-A1-2010/011227
- GB-A- 2 233 334
- US-A- 5 417 896
- US-A1- 2001 040 150
- US-A1- 2003 000 172
- US-A1- 2007 098 900
- US-A1- 2013 189 617
- US-B2- 8 461 075

## Description

The present invention relates to a method for processing polymeric sheets, and to the associated sheets.

Currently, the use of polymeric sheets (with a polyolefin matrix) that are compact or multiwall (i.e., crossed internally by hollow channels) is increasingly widespread; these sheets are used in several fields of application (food industry, glass-making industry, paper-making industry, building industry, pharmaceutical industry, and others).

These sheets can thus be used for logistical purposes, for packaging, for protection and covering, et cetera, optionally as a replacement for more traditional materials (such as paper or cardboard), which are now inadequate for the increasingly stringent requirements of the reference markets.

Indeed some market requirements (for example of the food or pharmaceutical sector, but not only), have pushed these manufacturing companies to seek solutions to imprint on the sheets specific lettering or writing, in order to bear the information that allows to ensure complete traceability, a requirement that is now necessary in order to meet the high quality standards imposed by the various standards of reference.

For this purpose, therefore, it is known to resort to flexographic ink printing methods (performed during the extrusion step or later), to the use of inkjet printing by means of industrial printers of the inkjet type, or to thermal ink transfer technologies (which adopt an inking ribbon in cooperation with an imprintable ribbon).

Such constructive solutions, however, are not devoid of drawbacks.

The standards of reference of some industrial sectors, such as for example the food or pharmaceutical sector, have increasingly stringent requirements in terms of non-toxicity, and it is therefore often problematic to comply with these standards by resorting to inks of a known type.

Moreover, commercially available inks are often scarcely resistant to abrasion and more generally to the various chemical-physical agents with which the sheet can come into contact during its useful life: this causes the risk of losing information on traceability (properties and origin, for example), a consequence that is obviously unacceptable for manufacturers and users.

Moreover, the severity of this limitation of known solutions is even greater in recent times, since there is a constant increase in applications that reuse the sheets, extending their useful life and making the requirement of traceability and preservation of the associated information even more crucial.

Additionally, the use of printing technologies such as the ones mentioned above force the storage and management of printing plates, inking ribbons and/or ink reserves, with evident logistical problems and an increase in storage costs and costs for the purchase of raw materials.

It should also be noted that polymeric sheets of the known type are often stacked together, for example in order to be able to store them and transfer them in a practical manner from the production site to the place of use.

The subsequent pickup of the individual sheets, upon their use, is managed by means of automatic machines provided for this purpose in view of the large size and weight of said sheets.

Indeed, the large size of the complete sheets sometimes causes one of them to adhere to the underlying one (due to a sort of suction effect or due to an electrostatic effect), so much that the subsequent individual pickup becomes problematic, to the point of causing the jamming of the automatic machine, with consequent and obviously unwelcome machine downtimes.

US 2013/189617 A1 discloses a polymeric film that is laser imaged with text, simbols, and/or images. The polymeric film includes a laser imaged marking layer comprising a polyolefin, a photochromatic pigment, and an additive.

WO 2010/011227 A1 discloses a system and method for direct laser marking of plastics, including the use of a laser beam generated by a laser source and a laser beam focusing and steering device for directing a laser beam onto a plastic thermoplastic polymer composition substrate in a perdetermined pattern. Laser-enhancing doping additives are employed at relatively lower loading levels so as not to affect bulk modulus properties of the plastic article being marked.

GB 2 233 334 A discloses a method of surface treatment of polymer materials by the action of pulses of UV radiation. Polymer films have their surfaces modified chemically or structurally by the action of one or more pulses of high power violet radiation from pulsed excimer lasers.

US 2003/0000172 A1 discloses a polymeric twin wall board which includes a first substantially planar sheet forming the upper side of the board, a second substantially planar sheet forming the underside of the board and a plurality of spaced longitudinally extending webs connecting the first substantially planar sheet to the second substantially planar sheet. The difference between the level of the top surface of the first substantially planar sheet adjacent to its juncture with any of the longitudinally extending webs and the level of the top surface of the first substantially planar sheet intermediate any of the adjacent longitudinally extending webs is no more than about 1% of the average distance between adjacent longitudinally extending webs.

The aim of the present invention is to solve the problems described above, by proposing a method for processing polymeric sheets that allows to imprint thereon lettering, images or writing in a durable manner.

An apparatus for processing polymeric sheets that allows to imprint thereon lettering, images or writing in a durable manner is also disclosed.

Another object of the invention is to provide a polymeric sheet on which lettering, images or writing are imprinted in a durable manner.

Another object of the invention is to propose a method that allows to imprint on polymeric sheets lettering, images or writing, at the same time ensuring their non-toxicity.

Another object of the invention is to propose a method that can be performed simply and with low production and storage costs.

Another object of the invention is to propose a method that allows to obtain sheets that subsequently can be stacked together without the danger of mutual adhesion and of consequent machine downtimes during automatic pickup.

Another object of the invention is to propose a sheet that can be stacked on another sheet without the danger of mutual adhesion and of consequent machine downtimes during automatic pickup.

Another object of the invention is to propose a method that ensures high reliability in operation.

Another object of the invention is to provide a sheet that can be obtained easily starting from commonly commercially available elements and materials.

In accordance with the invention, there is provided a method for processing polymeric sheet and a polymeric sheet, as defined in the appended claims.

Further characteristics and advantages of the invention will become better apparent from the description of a preferred but not exclusive embodiment of the method, of the sheet according to the invention, with the apparatus shown by way of non-limiting example in the accompanying drawings, wherein:
Figure 1 is a schematic perspective view of the apparatus according to the disclosure in a first embodiment;
Figure 2 is a schematic perspective view of the apparatus according to the disclosure in a second embodiment.

The method according to the invention is intended for the processing of polymeric sheets 1, which can be used in several fields of application (food industry, glass-making industry, paper-making industry, building industry, pharmaceutical industry, and others) for logistical purposes, for packaging, for protection and covering, et cetera, being able to rely on the particularities that will be described in the pages that follow.

It should be noted furthermore that the polymeric sheets 1, to be subjected to the method according to the invention (and the apparatus 100 according to the disclosure), which are in turn, as will become apparent, directly the subject of the protection claimed herein, preferably have a polyolefin matrix, containing at least one polymeric material selected between polypropylene and polyethylene (or both, in percentages that can vary at will) and are obtained usually but not exclusively by extrusion.

The possibility is not excluded, in any case, to adopt the method according to the invention to process polymeric sheets 1 of a different type.

Moreover, the protective scope claimed herein includes the processing of polymeric sheets 1 (and the polymeric sheets 1 thus obtained) both of the compact type and of the multiwall type (i.e., crossed internally by hollow channels), depending on the specific requirements of application.

According to the invention, the processing method entails, in a step a., striking at least one face of at least one polymeric sheet 1 with a laser beam.

In this manner it is possible to cause the localized modification of at least one surface portion of the sheet 1 and the consequent surface alteration of the face.

It is specified from the outset that this localized modification can be first of all a sort of localized melting (which can also be defined as a "micromelting"), and reference shall be made to this type of modification in the continuation of the present description. Without abandoning the protective scope claimed herein, the possibility is provided in any case to produce, during step a., different types of localized superficial modifications, such as ablations, localized morphological modifications, localized modifications of the chemical and/or crystalline structure.

In any case, these modifications are limited conveniently to the surface portion of interest, without affecting the entire sheet 1.

In particular, in a first embodiment of the processing method according to the invention, step a. provides for striking at least one face of the polymeric sheet 1 with a laser beam, prolonging the exposure of the sheet 1 to the beam, until the color of the surface portion struck by the beam changes (indeed due to localized melting or due to another surface modification produced in this manner).

In this embodiment, therefore, the color change, which causes a color contrast between the struck surface portion and the adjacent regions, constitutes in practice the above cited surface alteration of the face.

Even more particularly, the method according to the invention entails, in a step b1. that precedes the already described step a., setting, even indirectly and by means of an interface 2 of a control and management unit 3 (for example a computer), at least one laser beam emission source 4, a predefined pattern, which corresponds to a marking of the type of lettering, an image, a code (a bar code, a Data Matrix code or a QR code, for example) or the like.

This marking can thus bear preferably information related to the traceability, origin, manufacturing date of the sheet 1, and the like.

In order to be able therefore to imprint on the sheet 1 the set marking, the method according to the invention entails repeating appropriately step a., varying at each iteration, according to the predefined pattern, the respective surface portion of the sheet 1 that is struck by the beam.

In this manner, in fact, thanks to the progressive color change of the surface portions struck according to said predefined pattern, and the consequent contrast produced between said portions and the adjacent regions, it is possible to obtain the marking on the face.

By performing in sequence step b1. and step a. (repeating the latter several times on the basis of the pattern set in step b1.) it is thus possible to imprint on the sheet 1 clearly (by way of the contrast) a marking of any type that bears information related to said sheet 1 (such as the information mentioned above).

The particular method of obtaining the marking renders it immune to abrasion phenomena and ensures that it cannot be attacked by detergents, solvents and other chemical/physical agents, and more generally ensures durability and permanence over time.

Traceability is thus maintained even in case of prolonged use or reuse of the sheets 1 through the years (substantially for the entire life thereof), thus meeting the increasingly stringent requirements in terms of quality of some industrial sectors (for example the food processing channel or the pharmaceutical channel).

It should be noted, moreover, that the marking imprinted on the sheet 1 is obtained without using inks or inked polymeric ribbons, as occurs in known solutions, and therefore in full compliance with any non-toxicity requirements.

Therefore, the choice of the specific type of emission source 4 (of which a possible example will be given in the pages that follow), and of the corresponding operating parameters, is performed as a function of the specific result that one wishes to obtain in this mode of execution of the method according to the invention (indeed, color changing of the surface portions struck by the beam).

It should be noted that the result obtained above does not provide for the purchase or management of inks, printing plates, polymeric ribbons that are and/or can be inked (by thermal transfer) and the like, thereby ensuring a simplification of procedures and a significant saving on production costs and logistic costs.

Moreover, it should be noted that the way of setting the predefined pattern on the control and management unit 3 can be managed by a software that is loaded appropriately on said control and management unit 3 and can vary according to the specific requirements.

In a first operating mode, the user is entrusted directly with the task of setting on the interface 2 a pattern that is constituted by the surface portions that the laser beam must strike, so as to obtain the desired marking on the sheet 1.

Preferably, in a second operating mode, the software is provided with the graphic tools required to provide the user with the possibility to load the desired marking directly, taking over the task of converting said marking into the pattern of surface portions to be struck.

The use of a software provided with suitable graphic tools that are sufficiently versatile, moreover, allows the user to provide substantially any type of marking on the sheet 1.

In any case, the control and management unit 3 then imparts a series of commands to the emission source 4 (which therefore can move with respect to the sheet 1) in order to be able to strike sequentially different surface portions of the latter indeed according to the predefined pattern.

This allows to convert the information provided by the user regarding the marking that he wishes to obtain into a sequence of iterations of step a., aimed at the corresponding surface portions of the sheet 1 to be struck, in order to determine its localized melting.

The set of localized meltings (or in any case of the produced surface modifications) and the consequent color change of the surface portions, produces by contrast and in an absolutely clear manner the formation of the marking on the face of the sheet 1 regardless of its color (before being subjected to the processing method according to the invention).

It is specified that the method according to the invention can also provide for repeating step a., affecting appropriately both faces of the sheet 1 to be altered superficially (or can resort to two sources 4 that operate simultaneously on respective faces), so as to imprint on each of them preferably the same data and the same information (or optionally even different writing, depending on the specific requirements).

Usefully, the method according to the invention entails, in a step c. that follows step a. (or the various iterations of step a.), acquiring by means of an optical reader the marking and the information imprinted on the sheet 1.

The optical reader (selected as a function of the type of markings that one wishes to imprint on the sheets 1, and therefore for example of the type of a bar code reader, QR code reader or Data Matrix code reader) thus allows to verify immediately (in real time) the correctness of the information imprinted on the sheet 1 and to store it appropriately in a respective data bank (for example a memory unit connected to the control and management unit 3).

The optical reader can be provided furthermore with one or more specific lighting sources: thanks to these sources it is in fact possible to maximize the color contrast between the surface portions struck by the beam and the adjacent regions, thus facilitating the task of said optical reader.

In a different mode of execution (which does not exhaust the modes that are in any case within the protective scope claimed herein), step a. of the processing method according to the invention provides for striking at least one face (or both) of at least one sheet 1 with a laser beam, extending its exposure to the beam until a surface hollow of predefined depth is produced (and therefore in this mode of execution the surface alteration is indeed constituted by the hollow).

In this manner, when the sheet 1 is stacked on another sheet 1 (or on a sheet of the traditional type), resting the first one on the second one indeed at the face where the surface hollow has been provided, said hollow reduces and/or eliminates the danger of any mutual adhesion, as instead occurs sometimes when sheets of a known type are stacked together.

It should be noted, moreover, that due to the melting, an accumulation of melted polymeric material which protrudes externally from the face (and therefore can be detected also to the touch) occurs along the edges of the surface hollow: this accumulation constitutes in practice a ridge, which usefully helps to avoid the danger of mutual adhesion.

More particularly, in this mode of execution the method according to the invention entails in a step b2. that precedes step a. defining (directly or indirectly), by means of an interface 2 of a control and management unit 3 of at least one laser beam emission source 4, an ordered distribution of surface hollows of predefined depth.

In this case also, therefore, the choice of the specific type of emission source 4 (of which a possible example will be provided in the pages that follow) and of the corresponding operating parameters is made as a function of the specific result that one wishes to obtain in this mode of execution of the method according to the invention (the provision of surface hollows).

Moreover, the interface 2 and/or the control and management unit 3 can be of the type described in the preceding pages, for the first proposed embodiment, or different, without thereby abandoning the protective scope claimed herein.

In any case, after defining in step b2. the ordered distribution of surface hollows that one wishes to obtain, in a manner similar to what is observed for the preceding mode of execution, step a. is conveniently repeated (optionally by resorting to two or more sources 4 that operate simultaneously), varying at each iteration the respective surface portion of the sheet 1 that is struck by the beam.

In fact, the software with which the control and management unit 3 is provided can force the source 4 to direct the laser beam toward the surface portions that correspond to the ordered distribution that one wishes to obtain, until indeed it is provided.

In this manner, the processing method according to the invention allows to obtain a predefined alteration of the surface roughness of the at least one face of the sheet 1 (roughness which indeed corresponds to the ordered distribution of hollows and to the ridges constituted by the melted material accumulated along their edges).

The surface roughness thus obtained allows to solve the problems, mentioned in the preceding pages, that are a consequence of the mutual stacking of polymeric sheets of the known type. The roughness in fact allows to interpose air between the stacked sheets 1 (or between a sheet 1 according to the invention and a sheet of the known type), so as to reduce and/or eliminate the danger of mutual adhesion (due to suction effect or electrostatic effect), which causes drawbacks, malfunctions and/or machine downtimes during the subsequent individual pickup of individual sheets of the known type.

Also with reference to the already cited figures, therefore, the reference numeral 100 generally designates an apparatus for processing polymeric sheets 1, which can be of the type already described in the preceding pages, in which some possible applications thereof have also been mentioned by way of nonlimiting example.

According to the disclosure, the apparatus 100 comprises a processing station 101 for polymeric sheets 1 that is affected by at least one laser beam emission source 4.

To allow the processing of the sheets 1, at at least the emission source 4 the station 101 can be provided with a feeding line 101a capable of moving sequentially said sheets 1, or in any case with means for loading and unloading them, in order to bring them at said source 4.

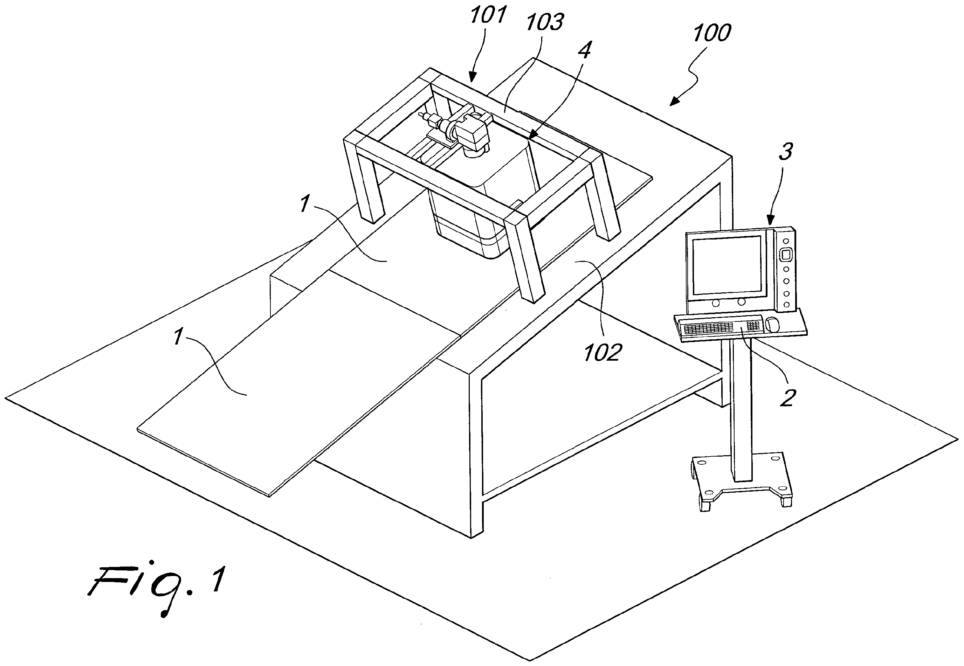

For example, as can be deduced from the accompanying Figure 1, the station 101 can be provided with a table 102 (which is inclined or not) and to which the feeding line 101a can lead and on which the sheets 1 can slide, while in an upward region the source 4 acts and is supported by a frame 103 that allows it in any case to move with respect to the table 102.

In any case, the apparatus 100 allows to direct a laser beam, emitted indeed by the source 4, toward at least one face of a polymeric sheet 1, so as to produce the localized modification (be it a melting or other) of at least one surface portion thereof and the consequent surface alteration of the at least one face.

It should be noted therefore that in practice the apparatus 100 allows to perform the method according to the invention in order to cause the formation of at least one micromelting or of another surface modification on a face of a sheet 1, for example for the purposes described in relation to said method.

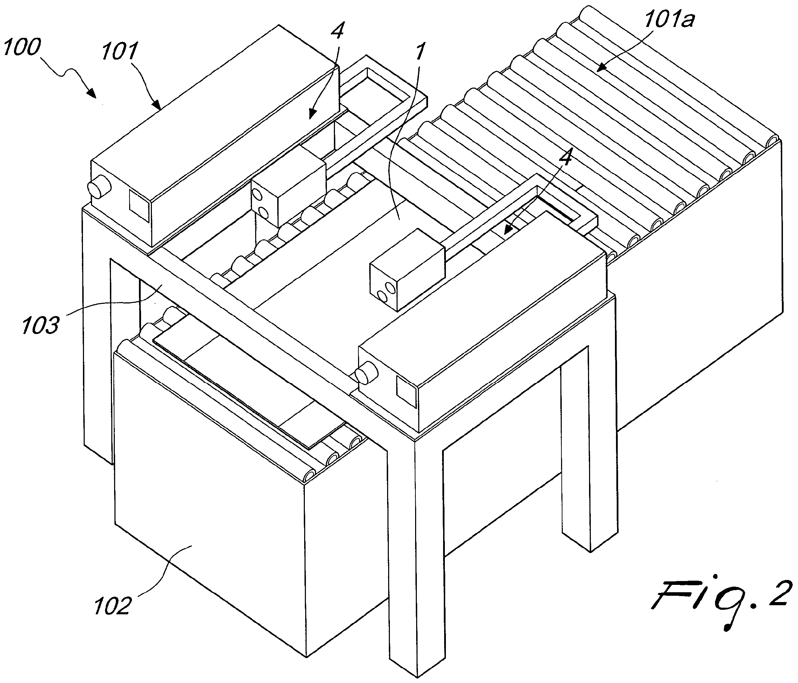

As will become better apparent hereinafter (and as shown for example in Figure 2), the apparatus 100 can be provided with a number of sources 4 at will, according to the specific requirements, in order to provide faster localized melting and consequent surface alteration of the entire face or to process both faces simultaneously.

In particular, in a possible embodiment (shown merely by way of example in Figure 1), the apparatus 100 is substantially capable of performing the method according to the invention in the first mode described in the preceding pages.

In this embodiment the apparatus 100 in fact comprises a unit 3 for the control and management of the emission source 4 of the laser beam (or of two or more emission sources 4): the control and management unit 3 therefore is associated functionally with an interface 2, which can be used by an operator to set, even indirectly, a predefined pattern that corresponds to a marking, such as lettering, an image, a code, or the like.

In a manner similar to what has been observed in the preceding pages in relation to the method, the marking preferably bears information related to the traceability, origin, manufacturing date of the sheet 1 and the like, and is obtained on the face thereof as a consequence of color changing and consequent color contrast with the adjacent regions of respective surface portions struck by the laser beam sequentially, according to the predefined pattern.

By moving over the sheet 1, the source 4, controlled by the control and management unit 3, can in fact strike sequentially respective surface portions of the sheet 1 in order to cause color change and thus obtain the desired marking.

As anticipated, the possibility is nonetheless not excluded (and is in any case within the protective scope claimed herein) to provide the station 101 with two sources 4: the first one can thus be arranged in an upward region (as indeed in the accompanying figures) while the second one is arranged below the position in which the sheet 1 is arranged during the execution (optionally repeated) of step a.

Thus, during said step a. it is possible to strike simultaneously both faces of the polymeric sheet 1 (conveniently supported so that indeed each face is exposed to the respective source 4) for localized melting and consequent surface alteration of both faces of the sheet.

Conveniently, the apparatus 100 comprises also at least one optical reader of the marking and of the information imprinted on the plate 1, so as to be able to verify immediately its correctness and store it in a respective data bank. As already shown, the reader in turn can be associated with one or more light sources in order to enhance color contrast.

It should be noted that in the embodiment that provides for two emission sources 4, said sources can be controlled and managed by the same unit 3, while two optical readers are conveniently arranged proximate to the sheet 1 in order to detect and store the markings and the information imprinted by each source 4 (and which preferably are the same for each face).

In particular, in order to emit a laser beam that is capable of causing surface melting with consequent color changing of the struck surface portions, in the preferred embodiment, mentioned by way of nonlimiting example of the application of the invention, the source 4 is an air cooled ytterbium optical fiber source 4.

In this preferred embodiment, the ytterbium optical fiber source 4 (with a power at will, for example selected between 10 W, 20 W, 30 W and 50 W) operates at a wavelength comprised between 800 nm and 1200 nm and operates preferably at a wavelength comprised between 1060 nm and 1070 nm.

In a different embodiment, which is proposed schematically, merely by way of example, in Figure 2, the apparatus 100 substantially is capable of performing the method according to the invention in the second mode described in the preceding pages.

In this embodiment, the apparatus 100 comprises again a control and management unit 3 for at least one laser beam emission source 4 (and for example two side-by-side sources 4, as in Figure 2), but in this case, preferably and not exclusively, each source 4 (again with power at will, but selected preferably among 300 W, 500 W and 750 W) operates at a wavelength comprised between 8 µm and 12 µm and is preferably but not exclusively of the CO₂ type.

It is noted furthermore that in the embodiment proposed in Figure 2, the side-by-side sources 4 are capable of moving along an advancement direction that is transverse to the advancement direction of the sheet 1 and that indeed while they move transversely to the sheet 1, which in turn advances, said sheet is struck by the laser beam (although different modes of mutual movement are not excluded and are in any case within the protective scope claimed herein).

Moreover, the control and management unit 3 is associated functionally with an interface 2, which in this embodiment can be used by an operator to define even indirectly and subsequently provide an ordered distribution of surface hollows having a predefined depth.

As indeed already shown in relation to the second mode of execution of the processing method according to the invention, these hollows (and the surrounding ridges) can be obtained by means of the laser beam following the localized melting, to the predefined depth, of respective surface portions of the sheet 1, with consequent alteration of the surface roughness of at least one face thereof.

The apparatus 100, in its several embodiments, therefore allows to process sheets 1, obtaining respectively on them the types of surface alteration described in relation to the method according to the invention (performed indeed by the apparatus 100). Therefore, the purposes and advantages that can be obtained by performing the method according to the invention evidently extend also to the use of the apparatus 100 for processing sheets 1.

As mentioned in the preceding pages, the present description also claims protection for polymeric sheets 1, of the type already indicated in the preceding pages: according to the invention, the polymeric sheet 1 comprises therefore at least one modified surface portion, obtained following the treatment thereof by means of a laser beam, in order to cause the consequent surface alteration of the respective face provided with said portion.

Said modified surface portion can in practice be constituted by a localized melting or by another type of surface modification that can be obtained by means of the action of the laser beam.

In practice, therefore, the polymeric sheet 1 according to the invention can be obtained by performing the method according to the invention and/or by using the apparatus 100 according to the disclosure.

In particular, in a first embodiment (which corresponds substantially to the first mode of execution of the method that has been described and/or to the first embodiment of the apparatus 100 already described), the polymeric sheet 1 has, along at least one face, a plurality of modified surface portions, obtained following the prolonged treatment of the surface portions by means of a laser beam until color changing occurs.

As already noted extensively in the preceding pages, the plurality of localized meltings (or other type of modified surface portions) thus defines, by color contrast with the adjacent regions, a marking of the type of lettering, an image, a code, or the like. Said marking can therefore preferably but not exclusively bear information related to the traceability, origin, manufacturing date of the sheet 1, and the like, information which, due to the particular manner with which it has been applied to the sheet 1, is imprinted thereon in a durable manner that cannot be altered and attacked by chemical/physical agents.

More particularly, the polymeric sheet 1 according to the invention comprises a polyolefin matrix (which in turn has polypropylene and/or polyethylene, in proportions that can vary at will) and at least one additive (although the possibility that the sheet 1 according to the invention comprises no additives is not excluded). Indeed to obtain a better color contrast with respect to the adjacent regions, the additive facilitates color changing of the surface portions struck by the laser beam: in practice, therefore, the addition of the additive achieves the goal already achieved by the lighting sources to be associated with the optical reader (described in the preceding pages), with respect to which it is therefore a potential alternative or a further means for reinforcing the effect, depending on the specific requirements of application.

Merely by way of nonlimiting example of the application of the invention, the possibility is mentioned hereafter that said additive is preferably of the type of a pigment based on mica, coated with iron oxides. This pigment is mixed directly with the matrix and added to the composition before providing the sheet 1.

In a second embodiment (which corresponds substantially to the second mode of execution of the method that has been described and/or to the second embodiment of the apparatus 100 that has already been shown), the polymeric sheet 1 instead has, along at least one of its faces, an ordered distribution of surface hollows of predefined depth, which can be obtained following the localized modification, to said predefined depth, of respective surface portions struck by the laser beam, with consequent alteration of the surface roughness of the corresponding face.

As shown, the increase in roughness also receives the contribution of the accumulations of melted material along the edges of the hollows, which form ridges that protrude from the face of the sheet 1.

Again, therefore, it should be noted that this embodiment of the sheet 1 reduces and/or avoids the danger of surface adhesion in case of stacking, as already noted in the preceding pages.

It is therefore evident that the polymeric sheets 1 according to the invention, in the several proposed embodiments, also achieve the benefits and advantages already described in relation to the processing method according to the invention (and to the apparatus 100 according to the disclosure).

The method according to the invention, the apparatus 100 according to the disclosure, and the sheet 1 according to the invention therefore allow, in the first mode of execution/embodiment, to imprint on one or both faces of a sheet images, codes and markings in general, in a durable and non-toxic manner, at the same time allowing useful reduction in production and storage costs.

In the second mode of execution/embodiment, the method according to the invention, the apparatus 100 according to the disclosure, and the sheet 1 according to the invention, ensure the possibility of stacking without the danger of mutual adhesion and of consequent machine downtimes during automatic pickup.

In practice it has been found that the method and the sheet according to the invention achieve fully the intended aim, since thanks to the use of a laser beam that strikes at least one face of at least one sheet, for localized modification of at least one surface portion and consequent surface alteration, it is possible to imprint on the sheet lettering, images or writing, in a durable manner.

In the examples of embodiment shown, individual characteristics, given in relation to specific examples, may actually be interchanged with other different characteristics that exist in other examples of embodiment.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for processing polymeric sheets (1) having a polyolefin matrix containing at least one polymeric material selected between polypropylene and polyethylene, or both,
said sheets (1) being of the multiwall type crossed internally by hollow channels,
the method **characterized in that** it provides, in a step a., for striking at least one face of at least one polymeric sheet (1) with a laser beam, for the localized modification of at least one surface portion of the sheet (1), and the consequent superficial alteration of the at least one face, and prolonging the exposure of the sheet (1) to the beam until a surface hollow of predefined depth is formed in order to reduce and/or eliminate the danger of any adhesion of the face of the sheet (1) struck by the laser to an additional sheet (1), as a consequence of their mutual stacking.

2. The method according to claim 1, **characterized in that** it entails, in a step b1. that precedes said step a., setting, even indirectly and by means of an interface (2) of a control and management unit (3) of at least one emission source (4) of the laser beam, a predefined pattern that corresponds to a marking of the type of lettering, an image, a code, or the like, preferably bearing information related to traceability, origin, date of manufacture of the sheet (1), and the like, said step a. being repeated by varying at each iteration, according to said predefined pattern, the respective surface portion of the sheet (1) that is struck by the beam, until said marking is obtained on the face by color contrast between the surface portions struck according to said predefined pattern and the adjacent regions.

3. The method according to one or more of the preceding claims, **characterized in that** it entails, in a step c. that is subsequent to said step a., acquiring by means of an optical reader the marking and the information imprinted on the sheet (1) in order to verify and store them in a respective data bank.

4. The method according to one or more of the preceding claims, **characterized in that** it entails, in a step b2. that precedes said step a., defining, by means of an interface (2) of a control and management unit (3) of at least one laser beam emission source (4), an ordered distribution of surface hollows of predefined depth, said step a. being repeated by varying at each iteration the respective surface portion of the sheet (1) struck by the beam, until said ordered distribution is obtained, which corresponds to a predefined alteration of the surface roughness of the at least one face of the sheet (1).

5. The method according to one or more of claims 2 to 4, **characterized in that** said at least one source (4) is an an air cooled ytterbium optical fiber source (4) operating at a wavelength comprised between 800 nm and 1200 nm and operating preferably at a wavelength comprised between 1060 nm and 1070 nm.

6. The method according to one or more of claims 2 to 4 , **characterized in that** said at least one source (4) operates at a wavelength comprised between 8 µm and 12 µm and being of the CO ₂ type, said control and management unit (3) being associated functionally with an interface (2), which can be used by an operator, to define and subsequently provide an ordered distribution of surface hollows of predefined depth, which can be obtained as a consequence of the localized modification, to said predefined depth, of respective surface portions of the sheet (1), with consequent alteration of the surface roughness of the at least one face of the plate (1).

7. A polymeric sheet having a polyolefin matrix containing at least one polymeric material selected between polypropylene and polyethylene and being of the multiwall type crossed internally by hollow channels, said sheet (1) **characterized in that** it comprises at least one modified surface portion obtained as a consequence of the treatment of said surface portion by means of a laser beam, for a consequent surface alteration of the respective at least one face provided with said portion, by prolonging the exposure of the sheet (1) to the beam until a surface hollow of predefined depth is formed in order to reduce and/or eliminate the danger of any adhesion of the face of the sheet (1) struck by the laser to an additional sheet (1), as a consequence of their mutual stacking.

8. The polymeric sheet according to claim 7, **characterized in that** it has, along said at least one face, a plurality of said modified surface portions obtained following the prolonged treatment of said surface portions by means of a laser beam until color change occurs, said plurality of modified surface portions defining by color contrast with the adjacent regions a marking such as lettering, an image, a code, or the like, bearing information related to traceability, origin, date of manufacture of said sheet (1), and the like.

9. The polymeric sheet according to one or more of claims 7 and 8, **characterized in that** it comprises a polyolefin matrix and at least one additive in order to facilitate the color changing of said surface portions struck by the laser beam, said additive being of the type of a pigment based on mica coated with iron oxides.

10. The polymeric sheet according to claim 7 , **characterized in that** it has an ordered distribution of surface hollows of predefined depth, which can be obtained as a consequence of the localized modification, to said predefined depth, of respective said surface portions struck by the laser beam, with consequent alteration of the surface roughness of said at least one face.

## Patentansprüche

1. Ein Verfahren zur Verarbeitung von Polymerplatten (1) mit einer Polyolefinmatrix, die mindestens ein Polymermaterial enthält, gewählt aus Polypropylen und Polyethylen oder beidem,
wobei die Platten (1) vom mehrwandigen Typ sind, der innen von hohlen Kanälen durchquert wird,
wobei das Verfahren **dadurch gekennzeichnet ist, dass** es in Schritt a. das Auftreffen eines Laserstrahls auf mindestens eine Seite mindestens einer Polymerplatte (1) zur lokalisierten Modifikation mindestens eines Oberflächenabschnitts der Platte (1), die daraus folgende oberflächliche Veränderung der mindestens einen Seite und die Verlängerung des Aussetzens der Platte (1) gegenüber dem Strahl vorsieht, bis ein Oberflächenhohlraum vordefinierter Tiefe gebildet wird, um die Gefahr eines Anhaftens der Seite der Platte (1), auf die der Laser auftrifft, an einer zusätzlichen Platte (1) infolge ihrer gemeinsamen Stapelung zu verringern und/oder zu beseitigen.

2. Das Verfahren gemäß Anspruch 1, **dadurch gekennzeichnet, dass** es in einem Schritt b1., der dem Schritt a. vorausgeht, Folgendes beinhaltet: das Festsetzen, auch indirekt und mittels einer Schnittstelle (2) einer Steuer- und Verwaltungseinheit (3) mindestens einer Emissionsquelle (4) des Laserstrahls, eines vordefinierten Musters, das einer Markierung in der Art einer Beschriftung, eines Bildes, eines Codes oder dergleichen entspricht, die vorzugsweise Informationen bezüglich Nachverfolgbarkeit, Ursprung, Herstellungsdatum der Platte (1) und dergleichen trägt, wobei der Schritt a. wiederholt wird unter Änderung, bei jeder Wiederholung, entsprechend dem vordefinierten Muster, des jeweiligen Oberflächenabschnitts der Platte (1), auf welchen der Strahl auftrifft, bis die Markierung auf der Seite erzielt wird durch Farbkontrast zwischen den Oberflächenabschnitten, die entsprechend dem vordefinierten Muster getroffen werden, und den benachbarten Bereichen.

3. Das Verfahren gemäß einem oder mehreren der obigen Ansprüche, **dadurch gekennzeichnet, dass** es in einem Schritt c., der auf den Schritt a. folgt, Folgendes beinhaltet: das Erfassen der Markierung und der auf die Platte (1) aufgedruckten Information mit Hilfe eines optischen Lesers, um sie zu überprüfen und in einer dazugehörigen Datenbank zu speichern.

4. Das Verfahren gemäß einem oder mehreren der obigen Ansprüche, **dadurch gekennzeichnet, dass** es in einem Schritt b2., der dem Schritt a. vorangeht, Folgendes beinhaltet: das Definieren, mit Hilfe einer Schnittstelle (2) einer Steuer- und Verwaltungseinheit (3) mindestens einer Laserstrahl-Emissionsquelle (4), einer geordneten Verteilung von Oberflächenhohlräumen vordefinierter Tiefe; wobei der Schritt a. wiederholt wird unter Änderung, bei jeder Wiederholung, des jeweiligen Oberflächenabschnitts der Platte (1), auf welchen der Strahl auftrifft, bis die geordnete Verteilung erreicht ist, die einer vordefinierten Änderung der Oberflächenrauheit der mindestens einen Seite der Platte (1) entspricht.

5. Das Verfahren gemäß einem oder mehreren der Ansprüche 2 bis 4, **dadurch gekennzeichnet, dass** die mindestens eine Quelle (4) eine luftgekühlte Ytterbium-Glasfaserquelle (4) ist, die bei einer Wellenlänge zwischen 800 nm und 1200 nm und vorzugsweise bei einer Wellenlänge zwischen 1060 nm und 1070 nm arbeitet.

6. Das Verfahren gemäß einem oder mehreren der Ansprüche 2 bis 4, **dadurch gekennzeichnet, dass** die mindestens eine Quelle (4) mit einer Wellenlänge zwischen 8 µm und 12 µm arbeitet und vom CO₂-Typ ist, wobei die Steuer- und Verwaltungseinheit (3) funktionell mit einer Schnittstelle (2) verknüpft ist, die von einem Bediener genutzt werden kann, um eine geordnete Verteilung von Oberflächenhohlräumen mit vordefinierter Tiefe zu bestimmen und anschließend bereitzustellen, die erzielt werden kann infolge der lokalisierten Modifikation entsprechender Oberflächenabschnitte der Platte (1) bis zu der vordefinierten Tiefe, mit daraus folgender Änderung der Oberflächenrauheit der mindestens einen Seite der Platte (1) .

7. Eine Polymerplatte mit einer Polyolefinmatrix, die mindestens ein Polymermaterial enthält, gewählt aus Polypropylen und Polyethylen, vom mehrwandigen Typ, der innen von hohlen Kanälen durchquert wird, wobei die Platte (1) **dadurch gekennzeichnet ist, dass** sie mindestens einen modifizierten Oberflächenabschnitt umfasst, der infolge der Behandlung des Oberflächenabschnitts mittels eines Laserstrahls gewonnen wird zum Zwecke einer daraus folgenden Oberflächenänderung der jeweiligen mindestens einen Seite, die mit dem Abschnitt versehen ist; durch die Verlängerung des Aussetzens der Platte (1) gegenüber dem Strahl, bis ein Oberflächenhohlraum vordefinierter Tiefe gebildet wird, um die Gefahr eines Anhaftens der Seite der Platte (1), auf die der Laser auftrifft, an einer zusätzlichen Platte (1) infolge ihrer gemeinsamen Stapelung zu verringern und/oder zu beseitigen.

8. Die Polymerplatte gemäß Anspruch 7, **dadurch gekennzeichnet, dass** sie entlang der mindestens einen Seite eine Vielzahl der modifizierten Oberflächenabschnitte hat, die gewonnen werden nach der verlängerten Behandlung der Oberflächenabschnitte mit einem Laserstrahl, bis eine Farbänderung eintritt; wobei die Vielzahl modifizierter Oberflächenabschnitte durch Farbkontrast mit den benachbarten Bereichen eine Markierung, wie z. B. eine Beschriftung, ein Bild, einen Code oder dergleichen, bestimmen, welche Informationen bezüglich Nachverfolgbarkeit, Ursprung, Herstellungsdatum der Platte (1) und dergleichen trägt.

9. Die Polymerplatte gemäß einem oder mehreren der Ansprüche 7 und 8, **dadurch gekennzeichnet, dass** sie eine Polyolefinmatrix und mindestens einen Zusatzstoff umfasst, um die Farbänderung der Oberflächenabschnitte, auf die der Laserstrahl auftrifft, zu erleichtern; wobei der Zusatzstoff von der Art eines Pigments ist, das auf mit Eisenoxiden beschichtetem Glimmer basiert.

10. Die Polymerplatte gemäß Anspruch 7, **dadurch gekennzeichnet, dass** sie eine geordnete Verteilung von Oberflächenhohlräumen vordefinierter Tiefe hat, die infolge der lokalisierten Modifikation, bis zu der vordefinierten Tiefe, der jeweiligen Oberflächenabschnitte gewonnen werden können, auf die der Laserstrahl auftrifft, mit daraus folgender Änderung der Oberflächenrauheit der mindestens einen Seite.

## Revendications

1. Procédé de traitement de feuilles de polymère (1) comportant une matrice en polyoléfine contenant au moins un matériau polymère choisi entre le polypropylène et le polyéthylène, ou les deux, lesdites feuilles (1) étant du type à plusieurs parois traversées intérieurement par des canaux creux,
le procédé étant **caractérisé en ce qu'**il comprend, dans une étape a., le fait de heurter au moins une face d'au moins une feuille de polymère (1) avec un faisceau laser, pour réaliser une modification localisée d'au moins une partie de surface de la feuille (1), et la transformation superficielle consécutive de ladite au moins une face, et la prolongation de l'exposition de la feuille (1) au faisceau jusqu'à ce qu'un creux de surface de profondeur prédéfinie soit formé afin de réduire et/ou éliminer le risque d'une adhésion de la face de la feuille (1) heurtée par le laser sur une feuille additionnelle (1), en conséquence de leur empilement mutuel.

2. Procédé selon la revendication 1, **caractérisé en ce qu'**il comporte, dans une étape b1. qui précède ladite étape a., l'établissement, même indirectement et au moyen d'une interface (2) d'une unité de commande et de gestion (3) d'au moins une source d'émission (4) du faisceau laser, d'un motif prédéfini qui correspond à un marquage du type de lettrage, d'une image, d'un code ou élément similaire, portant de préférence des informations concernant la traçabilité, l'origine, la date de fabrication de la feuille (1), et informations similaires, ladite étape a. étant répétée en faisant varier à chaque itération, selon ledit motif prédéfini, la partie de surface respective de la feuille (1) qui est heurtée par le faisceau, jusqu'à ce que ledit marquage soit obtenu sur la face par contraste de couleur entre les parties de surface marquées selon ledit motif prédéfini et les régions adjacentes.

3. Procédé selon l'une ou plusieurs des revendications précédentes, **caractérisé en ce qu'**il comporte, dans une étape c. qui est consécutive à ladite étape a., l'acquisition au moyen d'un lecteur optique du marquage et des informations imprimés sur la feuille (1) afin de les vérifier et de les stocker dans une banque de données respective.

4. Procédé selon l'une ou plusieurs des revendications précédentes, **caractérisé en ce qu'**il comporte, dans une étape b2. qui précède ladite étape a., la définition, au moyen d'une interface (2) d'une unité de commande et de gestion (3) d'au moins une source d'émission de faisceau laser (4), d'une répartition ordonnée de creux de surface de profondeur prédéfinie, ladite étape a. étant répétée en faisant varier à chaque itération la partie de surface respective de la feuille (1) heurtée par le faisceau, jusqu'à ce que ladite répartition ordonnée soit obtenue, qui correspond à une transformation prédéfinie de la rugosité de surface de ladite au moins une face de la feuille (1).

5. Procédé selon l'une ou plusieurs des revendications 2 à 4, **caractérisé en ce que** ladite au moins une source (4) est une source à fibre optique à l'ytterbium à refroidissement par air (4) fonctionnant à une longueur d'onde comprise entre 800 nm et 1 200 nm et fonctionnant de préférence à une longueur d'onde comprise entre 1 060 nm et 1 070 nm.

6. Procédé selon l'une ou plusieurs des revendications 2 à 4, **caractérisé en ce que** ladite au moins une source (4) fonctionne à une longueur d'onde comprise entre 8 µm et 12 µm et est du type à CO₂, ladite unité de commande et de gestion (3) étant associée fonctionnellement à une interface (2), qui peut être utilisée par un opérateur, pour définir et fournir de façon consécutive une répartition ordonnée de creux de surface de profondeur prédéfinie, qui peut être obtenue en conséquence de la modification localisée, à ladite profondeur prédéfinie, de parties de surface respectives de la feuille (1), avec une transformation consécutive de la rugosité de surface de ladite au moins une face de la plaque (1).

7. Feuille de polymère comportant une matrice en polyoléfine contenant au moins un matériau polymère choisi entre le polypropylène et le polyéthylène, et qui est du type à plusieurs parois traversées intérieurement par des canaux creux, ladite feuille (1) étant **caractérisée en ce qu'**elle comprend au moins une partie de surface modifiée obtenue en conséquence du traitement de ladite partie de surface au moyen d'un faisceau laser, pour une transformation de surface consécutive de ladite au moins une face respective pourvue de ladite partie, en prolongeant l'exposition de la feuille (1) au faisceau jusqu'à ce qu'un creux de surface de profondeur prédéfinie soit formé afin de réduire et/ou éliminer le risque d'une adhésion de la face de la feuille (1) marquée par le laser sur une feuille additionnelle (1), en conséquence de leur empilement mutuel.

8. Feuille de polymère selon la revendication 7, **caractérisée en ce qu'**elle comporte, le long de ladite au moins une face, une pluralité desdites parties de surface modifiées obtenues suite au traitement prolongé desdites parties de surface au moyen d'un faisceau laser jusqu'à ce qu'un changement de couleur se produise, ladite pluralité de parties de surface modifiées définissant par contraste de couleur avec les régions adjacentes un marquage tel qu'un lettrage, une image, un code ou élément similaire, portant des informations concernant la traçabilité, l'origine, la date de fabrication de ladite feuille (1), et informations similaires.

9. Feuille de polymère selon l'une ou plusieurs des revendications 7 et 8, **caractérisée en ce qu'**elle comprend une matrice en polyoléfine et au moins un additif afin de faciliter le changement de couleur desdites parties de surface heurtées par le faisceau laser, ledit additif étant du type d'un pigment à base de mica enduit d'oxydes de fer.

10. Feuille de polymère selon la revendication 7, **caractérisée en ce qu'**elle a une répartition ordonnée de creux de surface de profondeur prédéfinie, qui peut être obtenue en conséquence de la modification localisée, à ladite profondeur prédéfinie, de parties de surface respectives heurtées par le faisceau laser, avec une transformation consécutive de la rugosité de surface de ladite au moins une face.
